# EUROPEAN PATENT APPLICATION

(11) **EP 4 601 050 A1**
(43) Date of publication of application: **13.08.2025**
(21) Application number: 23929190.9
(22) Date of filing: 28.03.2023
(51) Int. Cl.: H01M 4/66, H01M 4/505, H01M 4/525

(54) **POSITIVE ELECTRODE SHEET AND PREPARATION METHOD THEREFOR, BATTERY CELL, BATTERY, AND ELECTRIC DEVICE**

(71) Applicant: Contemporary Amperex Technology (Hong Kong) Limited, Central (HK)
(72) Inventor: SHI, Songjun, Ningde, Fujian 352100 (CN); LI, Jingru, Ningde, Fujian 352100 (CN); JIN, Haizu, Ningde, Fujian 352100 (CN); YU, Honggang, Ningde, Fujian 352100 (CN); LAI, Youlei, Ningde, Fujian 352100 (CN); CHEN, Xiangbin, Ningde, Fujian 352100 (CN); XING, Ke, Ningde, Fujian 352100 (CN); ZHAO, Zimeng, Ningde, Fujian 352100 (CN)
(74) Representative: Herrmann, Uwe
(86) International application number: PCT/CN2023/084490
(87) International publication number: WO 2024/197591

(57) **Abstract**

This application provides a positive electrode plate (1) and a preparation method (200) thereof, a battery cell (3), a battery (5), and an electric apparatus (6), belonging to the field of battery technology. The positive electrode plate (1) includes: a positive electrode current collector (10) and a first film layer (11) and a second film layer (12) disposed on the same side of at least one surface of the positive electrode current collector (10); where the first film layer (11) includes a first active material, and the first active material includes at least one of a material with an olivine structure and a material with a spinel structure; the second film layer (12) includes a second active material, and the second active material includes a material with a layered structure; a resistivity R1 of the first active material and a resistivity R2 of the second active material satisfy: 20 ≤ R2/R1 ≤ 500. The technical solution of the embodiment of this application enhances the performance of the battery cell (3).

## Description

### TECHNICAL FIELD

This application relates to the field of battery technology, particularly to a positive electrode plate and a preparation method thereof, a battery cell, a battery, and an electric apparatus.

### BACKGROUND

In recent years, the application scope of lithium-ion batteries has become increasingly broad, with widespread use in energy storage power systems such as hydropower, thermal power, wind power, and solar power plants, as well as in power tools, electric bicycles, electric motorcycles, electric vehicles, military equipment, aerospace, and various other fields.

The positive electrode plate serves as a component of the battery cell, and the performance of the positive electrode plate is crucial to the performance of the battery cell. Therefore, how to provide a positive electrode plate to enhance the performance of the battery cell is a technical problem urgently needing resolution.

### SUMMARY

This application is made in view of the above issues, with the purpose of providing a positive electrode plate to improve the performance of the battery cell.

To achieve the above purpose, this application provides a positive electrode plate and a preparation method thereof, a battery cell, a battery, and an electric apparatus.

According to a first aspect, this application provides a positive electrode plate including: a positive electrode current collector and a first film layer and a second film layer disposed on a same side of at least one surface of the positive electrode current collector; where the first film layer includes a first active material, and the first active material includes at least one of a material with an olivine structure and a material with a spinel structure; the second film layer includes a second active material, and the second active material includes a material with a layered structure; and a resistivity R1 of the first active material and a resistivity R2 of the second active material satisfy: 20 ≤ R2/R1 ≤ 500.

An embodiment of this application provides a positive electrode plate including a positive electrode current collector and a first film layer and a second film layer disposed on the same side of at least one surface of the positive electrode current collector. The first film layer includes a first active material, and the first active material includes a material with an olivine structure and a material with a spinel structure; the second film layer includes a second active material, and the second active material includes a material with a layered structure. A battery cell prepared using the first active material exhibits high reliability, while a battery cell prepared using the second active material exhibits high energy density. The arrangement of the first film layer and the second film layer, on one hand, facilitates balancing the energy density and reliability of the battery cell; on the other hand, the arrangement reduces the likelihood of the first active material adhering to the surface of the second active material, thereby reducing the accumulation of electrons on the surface of the second active material and lowering the risk of excessive lithium-ion deintercalation from the second active material, which contributes to improving the cycling performance of the battery cell. The resistivity R1 of the first active material and the resistivity R2 of the second active material satisfy: 20 ≤ R2/R1 ≤ 500, so that the difference in resistivity between the first active material and the second active material is relatively small, reducing the impact of electron accumulation on the surface of the second active material on the deintercalation of lithium ions from the second active material, thereby contributing to improving the cycling performance of the battery cell. Therefore, the technical solution of the embodiments of this application contributes to enhancing the performance of the battery cell.

In a possible implementation, the resistivity R1 of the first active material and the resistivity R2 of the second active material satisfy: 50 ≤ R2/R1 ≤ 300.

In the above technical solution, 50 ≤ R2/R1 ≤ 300, which further reduces the accumulation of electrons on the surface of the second active material, thereby further enhancing the cycling performance of the battery cell.

In a possible implementation, the resistivity R1 of the first active material ranges from 10 Ω·cm to 80 Ω·cm; optionally, from 20 Ω·cm to 60 Ω·cm. This range facilitates the preparation of the first active material while balancing the conductivity of the first film layer and the cycling performance of the battery cell.

In a possible implementation, the resistivity R2 of the second active material ranges from 1500 Ω·cm to 15000 Ω·cm; optionally, from 3000 Ω·cm to 9000 Ω·cm. This range facilitates the preparation of the second active material while balancing the conductivity of the second film layer and the cycling performance of the battery cell.

In a possible implementation, the second film layer is located on a surface of the first film layer away from the positive electrode current collector.

In the above technical solution, the second film layer is located on a surface of the first film layer away from the positive electrode current collector, which reduces the transmission path of lithium ions to the second active material, facilitates the performance of the second active material, and thereby contributes to improving the energy density and cycling performance of the battery cell.

In a possible implementation, the first film layer is located on a surface of the second film layer away from the positive electrode current collector.

In the above technical solution, the first film layer is located on a surface of the second film layer away from the positive electrode current collector, with the first film layer positioned at the outermost side of the positive electrode current collector, which contributes to improving the reliability of the battery cell and reducing the risk of fire or explosion.

In a possible implementation, the first active material includes a core of the first active material and a first coating layer covering the core of the first active material, where the core of the first active material includes at least one of a material with an olivine structure and a material with a spinel structure, and the first coating layer includes a carbon material.

In the above technical solution, covering the core of the first active material with the first coating layer contributes to enhancing the conductive performance of the first active material.

In a possible implementation, the material with an olivine structure includes LiFe_{1-x-y}MnₓM¹_{y}PO₄, where 0 ≤ x ≤ 1, 0 ≤ y < 1, 0 ≤ x+y ≤ 1, and M¹ includes at least one of transition metal elements or non-transition metal elements other than Fe and Mn; optionally, M¹ includes at least one of Cr, Mg, Ti, Al, Zn, W, Nb, and Zr; optionally, the LiFe_{1-x-y}MnₓM¹_{y}PO₄ includes at least one of LiFePO₄, LiMnPO₄, and LiFe_{0.5}Mn_{0.5}PO₄. This configuration provides high stability to the material with an olivine structure, thereby contributing to improving the reliability of the battery cell.

In a possible implementation, the material with a spinel structure includes at least one of LiMn₂O₄ and LiNiₑMn₂₋ₑO₄, where 0 < e < 2. A battery cell prepared using the material with a spinel structure exhibits high reliability, contributing to reducing the probability of fire or explosion in the battery cell.

In a possible implementation, the material with a layered structure includes at least one of LiCoO₂, LiMnO₂, LiNiO₂, LiNiₐCo_{b}Mn_{1-a-b}O₂, LiNi_{c}Co_{d}Al_{1-c-d}O₂, and nLi₂MnO₃·(1-n)LiM²O₂, where 0 < n < 1, M² includes at least one of Co, Ni, and Mn, 0 < a < 1, 0 < b < 1, 0 < a+b < 1, 0 < c < 1, 0 < d < 1, and 0 < c+d < 1. The material with a layered structure has a high specific capacity, thereby contributing to increasing the energy density of the battery cell.

In a possible implementation, a thickness d1 of the first film layer ranges from 40 µm to 160 µm; optionally, from 60 µm to 140 µm.

In the above technical solution, reasonably setting the thickness of the first film layer contributes to balancing the energy density and reliability of the battery cell.

In a possible implementation, a thickness d2 of the second film layer ranges from 40 µm to 160 µm; optionally, from 60 µm to 140 µm.

In the above technical solution, reasonably setting the thickness of the second film layer contributes to balancing the energy density and reliability of the battery cell.

In a possible implementation, based on the total weight of the first film layer, a weight percentage of the first active material ranges from 90 wt% to 99 wt%; optionally, from 96 wt% to 98 wt%; and/or, based on the total weight of the second film layer, a weight percentage of the second active material ranges from 90 wt% to 99 wt%; optionally, from 96 wt% to 98 wt%.

In the above technical solution, reasonably setting the mass ratio of the first active material to the first film layer contributes to improving the overall performance of the first film layer, balancing the energy density and reliability of the battery cell, as well as the conductivity and adhesion of the first film layer; reasonably setting the mass ratio of the second active material to the second film layer contributes to improving the overall performance of the second film layer, balancing the energy density and reliability of the battery cell, as well as the conductivity and adhesion of the second film layer.

In a possible implementation, based on the total weight of the first film layer, a weight percentage of a conductive agent in the first film layer ranges from 0.1 wt% to 1 wt%; optionally, from 0.3 wt% to 0.6 wt%; and/or, based on the total weight of the second film layer, a weight percentage of a conductive agent in the second film layer ranges from 0.1 wt% to 1 wt%; optionally, from 0.3 wt% to 0.6 wt%.

In the above technical solution, reasonably setting the content of the conductive agent in the first film layer contributes to balancing the conductivity and adhesion performance of the first film layer, as well as the energy density and reliability of the battery cell; reasonably setting the percentage of the conductive agent in the second film layer contributes to balancing the conductivity and adhesion performance of the second film layer, as well as the energy density of the battery cell.

In a possible implementation, the conductive agent includes at least one of superconducting carbon, conductive carbon black, Ketjen black, carbon dots, and carbon fibers. This configuration allows flexible selection of the type of conductive agent based on actual conditions.

In a possible implementation, based on the total weight of the first film layer, a weight percentage of a binder in the first film layer ranges from 1 wt% to 2 wt%; optionally, from 1.2 wt% to 1.4 wt%; and/or, based on the total weight of the second film layer, a weight percentage of a binder in the second film layer ranges from 1 wt% to 2 wt%; optionally, from 1.2 wt% to 1.4 wt%.

In the above technical solution, reasonably setting the percentage of the binder in the first film layer contributes to improving the adhesion between the first film layer and the second film layer or the positive electrode current collector, reducing the risk of wrinkling of the positive electrode plate, while also balancing the conductivity of the first film layer and the energy density and reliability of the battery cell; reasonably setting the percentage of the binder in the second film layer contributes to improving the adhesion between the second film layer and the first film layer or the positive electrode current collector, reducing the risk of wrinkling of the positive electrode plate, while also balancing the conductivity of the second film layer and the energy density of the battery cell.

In a possible implementation, the binder includes at least one of polyvinylidene fluoride, styrene-butadiene rubber, polytetrafluoroethylene, vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, vinylidene fluoride-hexafluoropropylene copolymer, vinylidene fluoride-trichloroethylene copolymer, fluorine-containing acrylate resin, polyacrylonitrile, polyvinylpyrrolidone, polyvinyl acetate, polyethylene-co-vinyl acetate, polyethylene oxide, and polyarylate.

According to a second aspect, this application provides a preparation method of a positive electrode plate, characterized by including: providing a positive electrode current collector; preparing a first film layer and a second film layer on the same side of at least one surface of the positive electrode current collector; where the first film layer includes a first active material, and the first active material includes at least one of a material with an olivine structure and a material with a spinel structure; the second film layer includes a second active material, and the second active material includes a material with a layered structure; a resistivity R1 of the first active material and a resistivity R2 of the second active material satisfy: 20 ≤ R2/R1 ≤ 500. The positive electrode plate prepared by this method, when applied to a battery cell, contributes to improving the performance of the battery cell.

According to a third aspect, this application provides a battery cell including the positive electrode plate according to the first aspect and any possible implementation thereof.

According to a fourth aspect, this application provides a battery including the battery cell according to the third aspect.

According to a fifth aspect, this application provides an electric apparatus including the battery according to the fourth aspect.

An embodiment of this application provides a positive electrode plate including a positive electrode current collector and a first film layer and a second film layer disposed on the same side of at least one surface of the positive electrode current collector. The first film layer includes a first active material, and the first active material includes at least one of a material with an olivine structure and a material with a spinel structure; the second film layer includes a second active material, and the second active material includes a material with a layered structure. A battery cell prepared using the first active material exhibits high reliability, while a battery cell prepared using the second active material exhibits high energy density. The arrangement of the first film layer and the second film layer, on one hand, facilitates balancing the energy density and reliability of the battery cell; on the other hand, the arrangement reduces the likelihood of the first active material adhering to the surface of the second active material, thereby reducing the accumulation of electrons on the surface of the second active material and lowering the risk of excessive lithium-ion deintercalation from the second active material, which contributes to improving the cycling performance of the battery cell. The resistivity R1 of the first active material and the resistivity R2 of the second active material satisfy: 20 ≤ R2/R1 ≤ 500, so that the difference in resistivity between the first active material and the second active material is relatively small, reducing the impact of electron accumulation on the surface of the second active material on the deintercalation of lithium ions from the second active material, thereby contributing to improving the cycling performance of the battery cell. Therefore, the technical solution of the embodiment of this application contributes to enhancing the performance of the battery cell.

### BRIEF DESCRIPTION OF DRAWINGS

FIG. 1 is a schematic diagram of a positive electrode plate according to an embodiment of this application;
FIG. 2 is a schematic diagram of a positive electrode plate according to an embodiment of this application;
FIG. 3 is a schematic diagram of a positive electrode plate according to an embodiment of this application;
FIG. 4 is a schematic diagram of a preparation method of a positive electrode plate according to an embodiment of this application;
FIG. 5 is a schematic diagram of a battery cell according to an embodiment of this application;
FIG. 6 is a schematic diagram of a battery module according to an embodiment of this application;
FIG. 7 is a schematic diagram of a battery according to an embodiment of this application; and
FIG. 8 is a schematic diagram of an electric apparatus according to an embodiment of this application.

### DESCRIPTION OF EMBODIMENTS

The following provides a detailed description of embodiments that specifically disclose the positive electrode plate and the preparation method thereof, the battery cell, the battery, and the electric apparatus of this application, with appropriate reference to the accompanying drawings. However, unnecessary detailed descriptions may be omitted in some cases. For example, detailed descriptions of well-known matters and repeated descriptions of substantially identical structures are omitted. This omission is to avoid unnecessarily prolonging the following descriptions, facilitating understanding by persons skilled in the art. Additionally, the accompanying drawings and the following descriptions are provided for persons skilled in the art to fully understand this application and are not intended to limit the subject matter described in the claims.

"Ranges" disclosed in this application are defined in the form of lower and upper limits. A given range is defined by selecting one lower limit and one upper limit, where the selected lower and upper limits define the boundaries of that specific range. Ranges defined in this manner may or may not include the end values, and any combination may be used, meaning that any lower limit may be combined with any upper limit to form a range. For example, if ranges of 60-120 and 80-110 are provided for a specific parameter, the ranges of 60-110 and 80-120 are also contemplated. Additionally, if the lower limit values of a range are given as 1 and 2, and the upper limit values of the range are given as 3, 4, and 5, the following ranges are all contemplated: 1-3, 1-4, 1-5, 2-3, 2-4, and 2-5. In this application, unless otherwise stated, a numerical range of "a-b" is a concise representation of any combination of real numbers between a and b, where both a and b are real numbers. For example, a numerical range of "0-5" means that all real numbers in the range of "0-5" are listed herein, and "0-5" is merely a concise representation of combinations of these values. Furthermore, a parameter expressed as an integer greater than or equal to 2 is equivalent to disclosing that the parameter is, for example, an integer such as 2, 3, 4, 5, 6, 7, 8, 9, 10, 11, 12, and so forth.

Unless otherwise specified, all embodiments and optional embodiments of this application may be combined with each other to form new technical solutions.

Unless otherwise specified, all technical features and optional technical features of this application may be combined with each other to form new technical solutions.

Unless otherwise specified, all steps in this application may be performed sequentially or randomly, preferably sequentially. For example, a method including steps (a) and (b) indicates that the method may include steps (a) and (b) performed sequentially or may include steps (b) and (a) performed sequentially. For example, if the foregoing method further includes step (c), step (c) may be added to the method in any order, such as the method including steps (a), (b), and (c), steps (a), (c), and (b), or steps (c), (a), and (b), and so forth.

Unless otherwise specified, "include" and "contain" mentioned in this application are inclusive or may be exclusive. For example, the terms "include" and "contain" may mean that other unlisted components may also be included or contained, or that only the listed components are included or contained.

Unless otherwise stated, the term "or" in this application is inclusive. For example, the phrase "A or B" means "A, B, or both A and B." More specifically, any one of the following conditions satisfies the condition "A or B": A is true (or present) and B is false (or not present); A is false (or not present) and B is true (or present); or both A and B are true (or present).

This application takes lithium-ion batteries as an example. A lithium-ion battery is a typical power battery, and due to the chemical reaction relying on the intercalation and deintercalation of lithium ions between the positive and negative electrodes for charging and discharging, lithium-ion batteries are also known as rocking chair batteries. During the charging process of a lithium-ion battery, lithium ions deintercalate from the positive electrode, move through the conduction of the electrolyte, and intercalate into the negative electrode active material; during the discharging process, lithium ions deintercalate from the negative electrode, move through the conduction of the electrolyte, and intercalate into the positive electrode active material.

It should be understood that the terms "lithium intercalation" and "intercalated" mentioned in this application refer to the process in which lithium ions are intercalated into the positive electrode active material or the negative electrode active material due to electrochemical reactions, and the terms "deintercalated," "lithium deintercalation," and "deintercalation" mentioned in this application refer to the process in which lithium ions are deintercalated from the positive electrode active material or the negative electrode active material due to electrochemical reactions.

Lithium-ion batteries are widely used in fields such as mobile phones, electric vehicles, and energy storage stations due to their high energy density, high voltage, and long cycling performance. The positive electrode plate serves as a component of the battery cell, and the performance of the positive electrode plate is crucial to the performance of the battery cell.

The positive electrode plate includes a positive electrode current collector and a film layer applied to the surface of the positive electrode current collector. The active material in this film layer is typically lithium iron phosphate with an olivine structure or a ternary material with a layered structure. When the film layer in the positive electrode plate includes only lithium iron phosphate active material, the battery cell prepared from this positive electrode plate exhibits high reliability, but the energy density of the battery cell is relatively low; when the film layer in the positive electrode plate includes only a ternary active material, the battery cell prepared from this positive electrode plate exhibits high energy density, but the reliability of the battery cell is relatively low.

Mixing lithium iron phosphate with lithium nickel cobalt aluminate and using the mixture as an active material to prepare the film layer on the surface of the positive electrode current collector facilitates balancing the energy density and reliability of the battery cell. However, after mixing of lithium iron phosphate with lithium nickel cobalt aluminate, lithium iron phosphate coats the surface of lithium nickel cobalt aluminate. Due to the significant difference in conductivity between lithium iron phosphate and lithium nickel cobalt aluminate, a large number of electrons accumulate on the surface of lithium nickel cobalt aluminate during the charging and discharging process of the battery cell, affecting the intercalation and deintercalation of lithium ions, thereby impacting the cycling performance of the battery cell.

In view of this, this application provides a positive electrode plate, where the positive electrode plate includes a positive electrode current collector and a first film layer and a second film layer disposed on the same side of at least one surface of the positive electrode current collector. The first active material in the first film layer has an olivine structure and/or a spinel structure, the second active material in the second film layer has a layered structure, and the resistivity R1 of the first active material and the resistivity R2 of the second active material satisfy: 20 ≤ R2/R1 ≤ 500. In this way, the first active material and the second active material are located in different film layers, reducing the likelihood of the first active material adhering to the surface of the second active material and reducing the resistivity difference between the first active material and the second active material, thereby contributing to mitigating the impact of electron accumulation on the surface of the second active material on the deintercalation of lithium ions from the second active material, which facilitates improving the cycling performance of the battery cell.

### [Positive electrode plate]

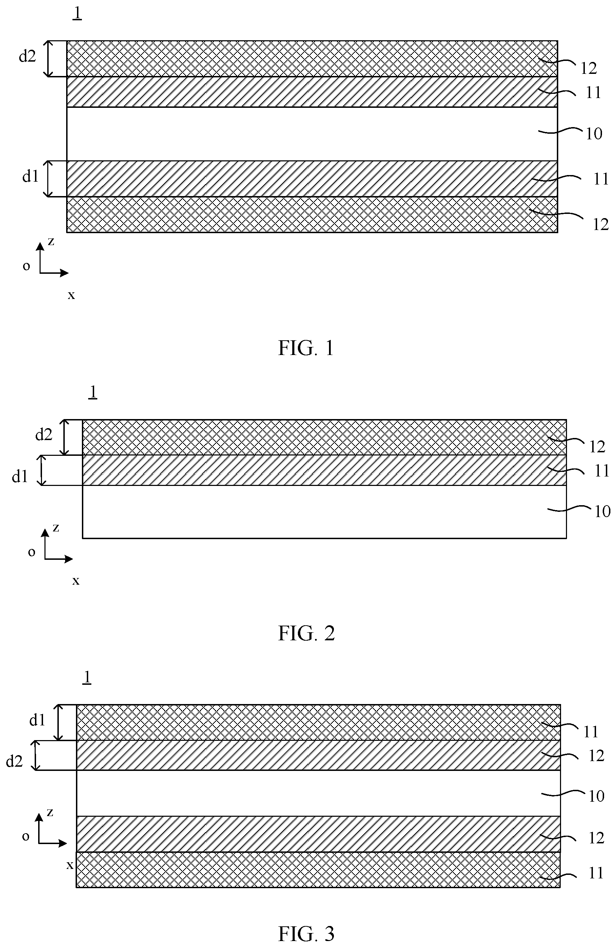

FIG. 1 is a schematic diagram of a positive electrode plate according to an embodiment of this application. As shown in FIG. 1, the positive electrode plate 1 includes a positive electrode current collector 10, and a first film layer 11 and a second film layer 12 disposed on the same side of at least one surface of the positive electrode current collector 10.

The positive electrode current collector 10 has two surfaces arranged along the thickness direction, and the first film layer 11 and the second film layer 12 are disposed on the same surface of the positive electrode current collector 10. Optionally, as shown in FIG. 1, both surfaces of the positive electrode current collector 10 are provided with the first film layer 11 and the second film layer 12.

FIG. 2 is a schematic diagram of a positive electrode plate according to an embodiment of this application. In some other embodiments, as shown in FIG. 2, one of the two surfaces of the positive electrode current collector 10 opposite along the thickness direction is provided with the first film layer 11 and the second film layer 12.

Optionally, along the thickness direction of the positive electrode current collector 10 (for example, the z-direction in FIG. 1), the first film layer 11 may be located between the positive electrode current collector 10 and the second film layer 12. In some other embodiments, the second film layer 12 is located between the positive electrode current collector 10 and the first film layer 11. The positional relationship between the first film layer 11 and the second film layer 12 may be set according to actual conditions, and the embodiments of this application impose no specific limitation on this.

The first film layer 11 includes a first active material, and the first active material includes at least one of a material with an olivine structure and a material with a spinel structure.

The olivine structure is a crystal structure of a material, where the crystal structure can represent the spatial arrangement of atoms in the material. A material with an olivine structure exhibits high stability, and when applied to a battery cell, the material reduces the risk of fire or explosion of the battery cell under conditions such as high temperature, thereby contributing to improving the reliability of the battery cell.

The material with an olivine structure may include various materials, such as LiFePO₄.

The spinel structure is a crystal structure of a material. When a material with a spinel structure is used in a battery cell, the battery cell exhibits high reliability, contributing to reducing the risk of fire or explosion of the battery cell.

The material with a spinel structure may include various materials, such as LiMn₂O₄.

The second film layer 12 includes a second active material, and the second active material includes a material with a layered structure.

The layered structure is a crystal structure of a material. A material with a layered structure has a high specific capacity, and when applied to a battery cell, the material increases the energy density of the battery cell. The specific capacity may refer to the ratio of the amount of electricity that the active material can release to the mass of the active material.

The material with a layered structure may include various materials, such as LiMO₂, where M includes at least one of Co, Ni, and Mn.

The first film layer 11 includes a first active material, the second film layer 12 includes a second active material, and the first film layer 11 and the second film layer 12 are different film layers. This configuration reduces the likelihood of contact between the first active material and the second active material, lowers the risk of the first active material adhering to or coating the surface of the second active material, and thereby mitigates the phenomenon of electron accumulation on the surface of the second active material due to the conductivity difference between the first active material and the second active material, which contributes to reducing the impact of accumulated electrons on the deintercalation of lithium ions from the second active material, facilitating improvement of the cycling performance of the battery cell.

The first film layer 11 includes a first active material, and the second film layer 12 includes a second active material. Compared to including only the second active material (such as a ternary material with a layered structure), the battery cell prepared from the positive electrode plate of the embodiment of this application exhibits higher reliability, with a reduced probability of explosion under extreme conditions (such as needle penetration test conditions).

The resistivity R1 of the first active material and the resistivity R2 of the second active material satisfy: 20 ≤ R2/R1 ≤ 500.

The resistivity of the first active material may refer to the resistivity of the first active material in powder form; the resistivity of the second active material may refer to the resistivity of the second active material in powder form.

Setting 20 ≤ R2/R1 ≤ 500 reduces the conductivity difference between the first active material and the second active material, contributing to mitigating the phenomenon of electron accumulation on the surface of the second active material due to an excessively large conductivity difference between the first active material and the second active material, thereby reducing the impact of electron accumulation on the surface of the second active material on the deintercalation of lithium ions from the second active material, lowering the risk of excessive lithium-ion deintercalation from the second active material, and thus facilitating enhancement of the cycling performance of the battery cell.

The cycling performance of the battery cell may be measured by the capacity retention rate, where the capacity retention rate is the ratio of the retained capacity to the initial discharge capacity. The retained capacity may refer to the discharge capacity of the battery cell after completing of a certain number of charge-discharge cycles. The initial discharge capacity may refer to the discharge capacity of the battery cell during the first charge-discharge test.

Optionally, the positive electrode current collector 10 is an aluminum foil, or may be a composite current collector formed of a metal and a polymer material.

The positive electrode plate of the embodiment of this application may be used to prepare a battery cell, and the battery cell may be used in various electric apparatuses, such as electric vehicles, lighting tools, and the like.

An embodiment of this application provides a positive electrode plate 1 including a positive electrode current collector 10 and a first film layer 11 and a second film layer 12 disposed on the same side of at least one surface of the positive electrode current collector 10. The first film layer 11 includes a first active material, and the first active material includes at least one of a material with an olivine structure and a material with a spinel structure; the second film layer 12 includes a second active material, and the second active material includes a material with a layered structure. The arrangement of the first film layer 11 and the second film layer 12, on one hand, facilitates balancing the energy density and reliability of the battery cell; on the other hand, the arrangement reduces the likelihood of the first active material adhering to or coating the surface of the second active material, thereby reducing the accumulation of electrons on the surface of the second active material and lowering the impact of accumulated electrons on the deintercalation of lithium ions from the second active material, which contributes to improving the cycling performance of the battery cell. The resistivity R1 of the first active material and the resistivity R2 of the second active material satisfy: 20 ≤ R2/R1 ≤ 500, so that the difference in resistivity between the first active material and the second active material is relatively small, reducing the accumulation of electrons on the surface of the second active material, thereby reducing the impact of electron accumulation on the surface of the second active material, lowering the impact of excessive lithium-ion deintercalation from the second active material, and thus facilitating improvement of the cycling performance of the battery cell. Therefore, the technical solution of the embodiment of this application contributes to enhancing the performance of the battery cell.

In some embodiments, the resistivity R1 of the first active material and the resistivity R2 of the second active material satisfy: 50 ≤ R2/R1 ≤ 300.

In this embodiment, setting 50 ≤ R2/R1 ≤ 300 further reduces the conductivity difference between the first active material and the second active material, further lowers the accumulation of electrons on the surface of the second active material, reduces the risk of excessive lithium-ion deintercalation from the second active material, and thereby facilitates enhancing the cycling performance of the battery cell.

In some embodiments, the resistivity R1 of the first active material ranges from 10 Ω·cm to 80 Ω·cm.

Optionally, the resistivity of the first active material is measured at 4 MPa. The resistivity of the first active material varies under different pressures.

When the resistivity R1 of the first active material is less than 10 Ω·cm, the preparation complexity of the first active material is high, such as requiring a large amount of conductive material to be applied to the outer layer of the material with an olivine structure, resulting in high cost and limited improvement in energy density; additionally, the configuration is not conducive to reducing the resistivity difference between the first active material and the second active material, resulting in limited improvement in the cycling performance of the battery cell.

When the resistivity R1 of the first active material is greater than 80 Ω·cm, the conductive performance of the first active material is low, which is not conducive to enhancing the conductivity of the first film layer 11, affecting the overall capacity performance of the battery cell and resulting in limited improvement in energy density.

In this embodiment, the resistivity R1 of the first active material ranges from 10 Ω·cm to 80 Ω·cm, facilitating the preparation of the first active material while balancing the conductivity of the first film layer 11 and the cycling performance of the battery cell, thereby contributing to improving the performance of the battery cell.

Optionally, the resistivity R1 of the first active material ranges from 20 Ω·cm to 60 Ω·cm. This range further contributes to improving the performance of the battery cell.

In some embodiments, the resistivity R2 of the second active material ranges from 1500 Ω·cm to 15000 Ω·cm.

Optionally, the resistivity of the second active material is measured at 4 MPa. The resistivity of the second active material varies under different pressures.

When the resistivity R2 of the second active material is less than 1500 Ω·cm, the preparation complexity of the second active material is high, requiring adjustment of the synthesis process to produce extremely small crystal grains, resulting in high preparation costs.

When the resistivity R2 of the second active material is greater than 15000 Ω·cm, the conductive performance of the second active material is low, which is not conducive to enhancing the conductivity of the second film layer 12. Additionally, the configuration is not conducive to reducing the resistivity difference between the first active material and the second active material, resulting in limited improvement in the cycling performance of the battery cell.

Optionally, different resistivities of the second active material may be achieved by modifying the preparation process of the second active material, adjusting the proportion of elements in the second active material, or providing a conductive coating layer on the second active material.

In this embodiment, the resistivity R2 of the second active material ranges from 1500 Ω·cm to 15000 Ω·cm, facilitating the preparation of the second active material while balancing the conductivity of the second film layer 12 and the cycling performance of the battery cell, thereby contributing to improving the performance of the battery cell.

Optionally, the resistivity R2 of the second active material ranges from 3000 Ω·cm to 9000 Ω·cm. This range further contributes to improving the performance of the battery cell.

In some embodiments, as shown in FIG. 1 and FIG. 2, the second film layer 12 is located on a surface of the first film layer 11 away from the positive electrode current collector 10.

The second film layer 12 is located on a surface of the first film layer 11 away from the positive electrode current collector 10, meaning that, along the thickness direction of the positive electrode current collector 10, the first film layer 11 is located between the positive electrode current collector 10 and the second film layer 12.

Optionally, the first film layer 11 is in direct contact with the positive electrode current collector 10. For example, a slurry for preparing the first film layer 11 is applied to the surface of the positive electrode current collector 10, and after processes such as drying, the first film layer 11 is formed.

Optionally, the first film layer 11 is in direct contact with the second film layer 12. For example, after preparing of the first film layer, a slurry for preparing the second film layer 12 is applied to the surface of the first film layer 11, and after processes such as drying, the second film layer 12 is formed. Alternatively, a specific coating tool is used to simultaneously apply the corresponding slurries to the surface of the positive electrode current collector 10 to prepare the first film layer 11 and the second film layer 12.

In this embodiment, the second active material in the second film layer 12 includes a material with a layered structure, and the second film layer 12 is located on a surface of the first film layer 11 away from the positive electrode current collector 10, which reduces the transmission path of lithium ions to the second active material, and facilitates the performance of the second active material, and thereby contributes to improving the energy density and cycling performance of the battery cell.

FIG. 3 is a schematic diagram of a positive electrode plate according to an embodiment of this application. In some embodiments, as shown in FIG. 3, the first film layer 11 is located on a surface of the second film layer 12 away from the positive electrode current collector 10.

The first film layer 11 is located on a surface of the second film layer 12 away from the positive electrode current collector 10, meaning that, along the thickness direction of the positive electrode current collector 10, the second film layer 12 is located between the first film layer 11 and the positive electrode current collector 10.

In this embodiment, the first film layer 11 is located on a surface of the second film layer 12 away from the positive electrode current collector 10, with the first film layer 11 positioned at the outermost side of the positive electrode current collector 10, which contributes to improving the reliability of the battery cell and reducing the risk of fire or explosion.

In some embodiments, the first active material includes a core of the first active material and a first coating layer covering the core of the first active material, where the core of the first active material includes at least one of a material with an olivine structure and a material with a spinel structure, and the first coating layer includes a carbon material.

For example, the conductivity of a material with an olivine structure is relatively poor, and providing the first coating layer on the surface of the core of the first active material contributes to improving the conductivity of the first active material. For instance, different resistivities of the first active material may be achieved by adjusting the mass proportion of the first coating layer in the first active material.

In this embodiment, the first coating layer covers the core of the first active material, contributing to enhancing the conductive performance of the first active material.

In some embodiments, the material with an olivine structure includes LiFe_{1-x-y}MnₓM¹_{y}PO₄, where 0 ≤ x ≤ 1, 0 ≤ y < 1, 0 ≤ x+y ≤ 1, and M¹ includes at least one of transition metal elements or non-transition metal elements other than Fe and Mn.

Optionally, M¹ includes at least one of Cr, Mg, Ti, Al, Zn, W, Nb, and Zr.

Optionally, LiFe_{1-x-y}MnₓM¹_{y}PO₄ includes at least one of LiFePO₄, LiMnPO₄, and LiFe_{0.5}Mn_{0.5}PO₄. This configuration provides high stability to the material with an olivine structure, thereby contributing to improving the reliability of the battery cell.

In some embodiments, the material with a spinel structure includes at least one of LiMn₂O₄ and LiNiₑMn₂₋ₑO₄, where 0 < e < 2. A battery cell prepared using the material with a spinel structure exhibits high reliability, contributing to reducing the probability of fire or explosion in the battery cell.

In some embodiments, the material with a layered structure includes at least one of LiCoO₂, LiMnO₂, LiNiO₂, LiNiₐCo_{b}Mn_{1-a-b}O₂, LiNi_{c}CoₐAl_{1-c-d}O₂, and nLi₂MnO₃·(1-n)LiM²O₂, where 0 < n < 1, M² includes at least one of Co, Ni, and Mn, 0 < a < 1, 0 < b < 1, 0 < a+b < 1, 0 < c < 1, 0 < d < 1, and 0 < c+d < 1. The material with a layered structure has a high specific capacity, thereby contributing to increasing the energy density of the battery cell.

In the embodiments of this application, during the charging and discharging process of the battery cell, the percentage of lithium ions changes due to intercalation, deintercalation, and consumption. Similarly, the percentage of oxygen ions may also change due to various conditions. Therefore, the general formulas of the material with an olivine structure, the material with a spinel structure, and the material with a layered structure measured from the positive electrode plate of the battery cell may differ from the general formulas provided above. For example, for LiCoO₂, the measured general formula may be Li₁₊ᵤCoO₂₊ᵣ, where u is a number less than 0, and r is a number less than 0.

In some embodiments, a thickness d1 of the first film layer 11 ranges from 40 µm to 160 µm.

When the thickness d1 of the first film layer 11 is not less than 40 µm, the high stability of the first active material allows a thicker first film layer 11 to enhance the reliability of the battery cell; when the thickness d1 of the first film layer 11 is not greater than 160 µm, the first film layer 11 occupies an appropriate space, providing more space for the second film layer 12 within the limited volume of the battery cell, which contributes to increasing the energy density of the battery cell.

In this embodiment, the thickness d1 of the first film layer 11 ranges from 40 µm to 160 µm, which contributes to balancing the reliability and energy density of the battery cell.

The thicknesses of the first film layer 11 and the second film layer 12 may be measured using a scanning electron microscope. For example, the thicknesses may be determined based on the magnification of the scanning electron microscope and the size of the image obtained through the scanning electron microscope.

Optionally, the thickness d1 of the first film layer 11 ranges from 60 µm to 140 µm. This range further balances the process feasibility, performance reliability, and energy density of the battery cell.

In this embodiment, reasonably setting the thickness of the first film layer 11 contributes to balancing the energy density and reliability of the battery cell.

In some embodiments, a thickness d2 of the second film layer 12 ranges from 40 µm to 160 µm.

When the thickness d2 of the second film layer 12 is not less than 40 µm, the high specific capacity of the second active material allows a thicker second film layer 12 to enhance the energy density of the battery cell; when the thickness d2 of the second film layer 12 does not exceed 160 µm, within the fixed volume of the battery cell, more space can be provided for the first film layer, which contributes to enhancing the reliability of the battery cell.

In this embodiment, the thickness d2 of the second film layer 12 ranges from 40 µm to 160 µm, which contributes to balancing the reliability and energy density of the battery cell.

Optionally, the thickness d2 of the second film layer 12 ranges from 60 µm to 140 µm. This range further contributes to balancing the reliability and energy density of the battery cell.

In some embodiments, based on the total weight of the first film layer 11, a weight percentage of the first active material ranges from 90 wt% to 99 wt%; optionally, from 96 wt% to 98 wt%, for example, 97 wt%; and/or, based on the total weight of the second film layer 12, a weight percentage of the second active material ranges from 90 wt% to 99 wt%; optionally, from 96 wt% to 98 wt%, for example, 97 wt%.

When the mass ratio of the first active material to the first film layer 11 is not less than 90 wt%, the configuration contributes to increasing the energy density of the battery cell; when the mass ratio of the first active material to the first film layer 11 exceeds 99 wt%, a conductive agent, a binder, or the like may be added to the first film layer, which contributes to enhancing the conductivity of the first film layer 11 and the adhesion between the first film layer 11 and the positive electrode current collector 10 or the second film layer 12.

In this embodiment, reasonably setting the mass ratio of the first active material to the first film layer 11 contributes to improving the overall performance of the first film layer 11, balancing the energy density and reliability of the battery cell, as well as the conductivity and adhesion of the first film layer 11.

Similarly, reasonably setting the mass ratio of the second active material to the second film layer 12 contributes to improving the overall performance of the second film layer 12, balancing the energy density and reliability of the battery cell, as well as the conductivity and adhesion of the second film layer 12.

In some embodiments, based on the total weight of the first film layer 11, a weight percentage of a conductive agent in the first film layer 11 ranges from 0.1 wt% to 1 wt%; optionally, from 0.3 wt% to 0.6 wt%, for example, 0.5 wt%; and/or, based on the total weight of the second film layer 12, a weight percentage of a conductive agent in the second film layer 12 ranges from 0.1 wt% to 1 wt%; optionally, from 0.3 wt% to 0.6 wt%, for example, 0.5 wt%.

When the mass ratio of the conductive agent in the first film layer 11 to the first film layer 11 is not less than 0.1 wt%, the configuration contributes to enhancing the conductivity of the first film layer 11; when the mass ratio of the conductive agent in the first film layer 11 to the first film layer 11 is not greater than 1 wt%, more first active material or binder may be added to the first film layer 11, which contributes to improving the adhesion performance of the first film layer 11 or the energy density and reliability of the battery cell.

When the mass ratio of the conductive agent in the second film layer 12 to the second film layer 12 is not less than 0.1 wt%, the configuration contributes to enhancing the conductivity of the second film layer 12; when the mass ratio of the conductive agent to the second film layer 12 is not greater than 1 wt%, more second active material or binder may be added to the second film layer 12, which contributes to improving the adhesion performance of the second film layer 12 or the energy density of the battery cell.

In this embodiment, reasonably setting the percentage of the conductive agent in the first film layer 11 contributes to balancing the conductivity and adhesion performance of the first film layer 11, as well as the energy density and reliability of the battery cell; reasonably setting the percentage of the conductive agent in the second film layer 12 contributes to balancing the conductivity and adhesion performance of the second film layer 12, as well as the energy density of the battery cell.

In some embodiments, the conductive agent includes at least one of superconducting carbon, conductive carbon black, Ketjen black, carbon dots, and carbon fibers. This configuration facilitates flexible selection of the type of conductive agent based on actual conditions.

In some embodiments, based on the total weight of the first film layer 11, a weight percentage of a binder in the first film layer 11 ranges from 1 wt% to 2 wt%; optionally, from 1.2 wt% to 1.4 wt%, for example, 1.3 wt%; and/or, based on the total weight of the second film layer 12, a weight percentage of a binder in the second film layer 12 ranges from 1 wt% to 2 wt%; optionally, from 1.2 wt% to 1.4 wt%, for example, 1.3 wt%.

When the mass percentage of the binder in the first film layer to the first film layer 11 is not less than 1 wt%, the configuration contributes to enhancing the adhesion performance of the first film layer 11; when the mass percentage of the binder in the first film layer 11 to the first film layer 11 is not greater than 2 wt%, more first active material or conductive agent may be added to the first film layer 11, which contributes to improving the conductivity of the first film layer 11 or the energy density and reliability of the battery cell.

When the mass ratio of the binder in the second film layer 12 to the second film layer 12 is not less than 1 wt%, the configuration contributes to enhancing the adhesion performance of the second film layer 12; when the mass ratio of the binder in the second film layer 12 to the second film layer 12 is not greater than 2 wt%, more second active material or conductive agent may be added to the second film layer 12, which contributes to improving the conductivity of the second film layer 12 or the energy density of the battery cell.

In this embodiment, reasonably setting the percentage of the binder in the first film layer 11 contributes to improving the adhesion between the first film layer 11 and the second film layer 12 or the positive electrode current collector 10, reducing the risk of wrinkling of the positive electrode plate, while also balancing the conductivity of the first film layer 11 and the energy density and reliability of the battery cell. Reasonably setting the percentage of the binder in the second film layer 12 contributes to improving the adhesion between the second film layer 12 and the first film layer 11 or the positive electrode current collector 10, reducing the risk of wrinkling of the positive electrode plate, while also balancing the conductivity of the second film layer 12 and the energy density of the battery cell.

In the embodiments of this application, the types and percentages of the binder and the conductive agent in the first film layer 11 and the second film layer 12 may be flexibly set according to actual conditions, as long as the above reasonable ranges are satisfied.

In some embodiments, the binder includes at least one of polyvinylidene fluoride, styrene-butadiene rubber, polytetrafluoroethylene, vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, vinylidene fluoride-hexafluoropropylene copolymer, vinylidene fluoride-trichloroethylene copolymer, fluorine-containing acrylate resin, polyacrylonitrile, polyvinylpyrrolidone, polyvinyl acetate, polyethylene-co-vinyl acetate, polyethylene oxide, and polyarylate.

### [Preparation method of positive electrode plate]

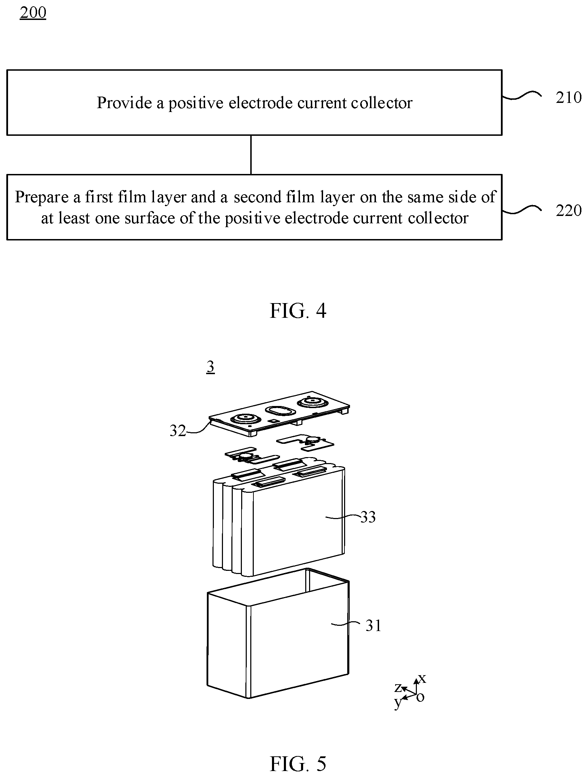

FIG. 4 is a schematic diagram of a preparation method of a positive electrode plate according to an embodiment of this application. An embodiment of this application provides a preparation method of a positive electrode plate, as shown in FIG. 4, where method 200 includes the following steps.

Step 210: Provide a positive electrode current collector 10.

Step 220: Prepare a first film layer 11 and a second film layer 12 on the same side of at least one surface of the positive electrode current collector 10; where the first film layer 11 includes a first active material, and the first active material includes at least one of a material with an olivine structure and a material with a spinel structure; the second film layer 12 includes a second active material, and the second active material includes a material with a layered structure; a resistivity R1 of the first active material and a resistivity R2 of the second active material satisfy: 20 ≤ R2/R1 ≤ 500.

The positive electrode plate prepared by this method, when applied to a battery cell, contributes to improving the performance of the battery cell.

### [Battery cell]

This application provides a battery cell including the positive electrode plate in the above embodiments.

The shape of the battery cell is not particularly limited in this application, and the battery cell may be cylindrical, rectangular, or of any other shape.

FIG. 5 is a schematic diagram of a battery cell according to an embodiment of this application. As shown in FIG. 5, the battery cell 4 includes a housing 31, a cover plate 32, and an electrode assembly 33 disposed within the housing 31.

The electrode assembly 33 may be made from the positive electrode plate, a negative electrode plate, and a separator of this application through a winding process or a stacking process.

Optionally, the battery cell 3 further includes an electrolyte. The electrolyte may be solid, semi-solid, or liquid, and the embodiments of this application impose no specific limitation on this.

In some embodiments, the battery cell may be assembled into a battery module, where there may be one or more battery cells contained in the battery module, and the specific number may be selected by persons skilled in the art based on the application and capacity of the battery module.

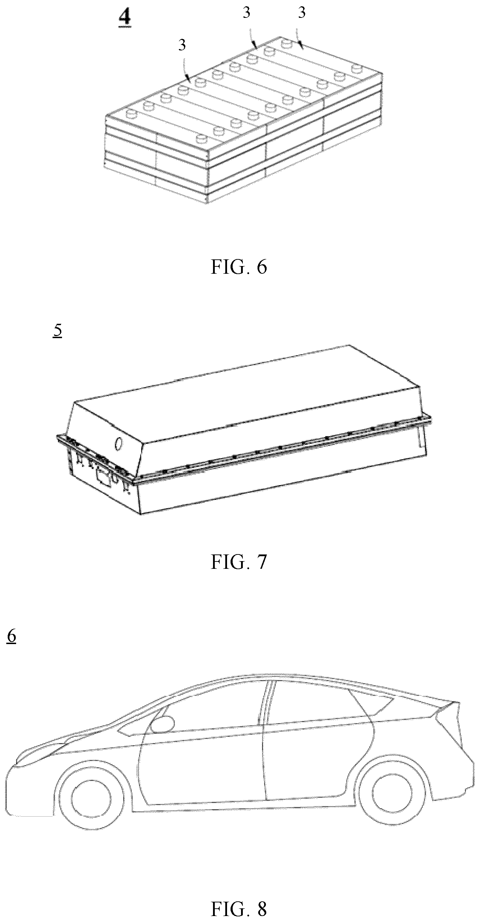

FIG. 6 is a schematic diagram of a battery module according to an embodiment of this application. Referring to FIG. 6, in the battery module 4, a plurality of battery cells 3 may be sequentially arranged along the length direction of the battery module 4. Certainly, the secondary batteries may alternatively be arranged in any other manner. Further, the plurality of battery cells 3 may be fastened through fasteners.

Optionally, the battery module 4 may further include a shell with an accommodating space, and the plurality of battery cells 3 are accommodated in the accommodating space.

### [Battery]

This application provides a battery including the battery cell described in the above embodiments.

FIG. 7 is a schematic diagram of a battery according to an embodiment of this application. As shown in FIG. 7, this application provides a battery 5 including the battery cell 3 in any of the above embodiments.

The battery cell 3 may directly constitute the battery 5, or may first constitute a battery module, with multiple battery modules then forming the battery 5.

### [Electric apparatus]

This application provides an electric apparatus including the battery described in the above embodiments.

FIG. 8 is a schematic diagram of an electric apparatus according to an embodiment of this application. As shown in FIG. 8, this application provides an electric apparatus 6 including the battery 5 in the above embodiments.

The following describes examples of this application. The examples described below are illustrative and used only to explain this application, and cannot be construed as limitations on this application. Examples whose technical solutions or conditions are not specified are made in accordance with technical solutions or conditions described in literature in the field or made in accordance with product instructions. Reagents or instruments used are all conventional products commercially available if no manufacturer is indicated.

### [Examples]

### Example 1

The structure of the positive electrode plate in Example 1 may refer to FIG. 1. In Example 1, the positive electrode current collector 10 was an aluminum foil with a thickness of 13 µm, the thickness d1 of the first film layer 11 was 120 µm, and the thickness d2 of the second film layer 12 was 80 µm.

In the first film layer 11, the first active material was LiFePO₄ with a carbon coating layer (also referred to as LFP), and the resistivity of the first active material was 30 Ω·cm at 4 MPa. The first film layer 11 also included conductive carbon black as a conductive agent and polyvinylidene fluoride (PVDF) as a binder. In the first film layer 11, based on the total weight of the first film layer 11, the weight percentage of the first active material in the first film layer 11 was 97 wt%, the weight percentage of the conductive agent in the first film layer 11 was 1 wt%, and the weight percentage of the binder in the first film layer 11 was 2 wt%.

In the second film layer 12, the second active material was LiNi_{0.6}Co_{0.2}Mn_{0.2}O₂ (also referred to as NCM), and the resistivity of the second active material was 4500 Ω·cm at 4 MPa. The second film layer 12 also included conductive carbon black as a conductive agent and PVD as a binder. In the second film layer 12, based on the total weight of the second film layer 12, the weight percentage of the second active material in the second film layer 12 was 97 wt%, the weight percentage of the conductive agent in the second film layer 12 was 1 wt%, and the weight percentage of the binder in the second film layer 12 was 2 wt%.

The ratio of the resistivity R2 of the second active material to the resistivity R1 of the first active material was 150.

### Examples 2 to 7

The difference between Examples 2-7 and Example 1 lied in different R2/R1 values.

In the examples, the R2/R1 values were respectively: 20, 50, 120, 180, 300, and 500.

### Examples 8-12

The difference between Examples 8-10 and Example 1 lied in the values of R1 and R2 being different.

In Example 8, R1 was 10, R2 was 1500, and R2/R1 was 150.

In Example 9, R1 was 20, R2 was 3000, and R2/R1 was 150.

In Example 10, R1 was 50, R2 was 7500, and R2/R1 was 150.

In Example 11, R1 was 60, R2 was 9000, and R2/R1 was 150.

In Example 12, R1 was 80, R2 was 12000, and R2/R1 was 150.

### Examples 13-16

The difference between Examples 13-16 and Example 1 lied in the thickness d1 of the first film layer 11 being different.

In Examples 13-16, the thickness d1 of the first film layer 11 was respectively: 40 µm, 60 µm, 140 µm, and 160 µm.

### Examples 17-20

The difference between Examples 17-20 and Example 1 lied in the thickness d2 of the second film layer 12 being different.

In Examples 17-20, the thickness d2 of the first film layer 12 was respectively: 40 µm, 60 µm, 140 µm, and 160 µm.

### Examples 21-23

The difference between Example 21 and Example 1 lied in the first active material being lithium manganese iron phosphate LiFe_{0.5}Mn_{0.5}PO₄, abbreviated as LFMP.

The difference between Example 22 and Example 1 lied in the first active material being LiMn₂O₄.

The difference between Example 23 and Example 1 lied in the first active material being a mixture of LiMn₂O₄ and LiFePO₄ with a mass ratio of 1:1.

### Example 24

The difference between Example 24 and Example 1 lied in the second active material being a lithium-rich manganese-based material Li_{1.2}Ni_{0.54}Co_{0.13}Mn_{0.13}O₂, abbreviated as LRNCM.

### Examples 25 and 26

The difference between Examples 25 and 26 and Example 1 lied in the structure of the positive electrode plate 1 being different. The structure may refer to FIG. 2 and FIG. 3.

### Comparative Example 1

The difference between Comparative Example 1 and Example 1 lied in not adopting a layered structure of the first film layer and the second film layer.

In Comparative Example 1, LiFePO₄ and LiNi_{0.6}Co_{0.2}Mn_{0.2}O₂ were mixed at a certain mass ratio and combined with conductive carbon black as a conductive agent, PVDF as a binder, and N-methylpyrrolidone (NMP) to prepare a positive electrode active material slurry. The positive electrode active material slurry is applied to an aluminum foil and dried to form a positive electrode plate.

### Comparative Example 2

The difference between Comparative Example 2 and Comparative Example 1 lied in R2/R1 being 700.

In Table 1, R1 represents the resistivity of the powder of the first active material, R2 represents the resistivity of the powder of the second active material, d1 represents the thickness of the first film layer 11, d2 represents the thickness of the second film layer 12, Q1 represents the cycling capacity retention rate of the battery cell at 25°C, Q2 represents the cycling capacity retention rate of the battery cell at 45°C, and Q3 represents the energy density of the battery cell.

**Table 1 Experimental data of examples and comparative examples**

| | First active material | | Second active material | | R2/R1 | d1 (µm) | d2 (µm) | Needle penetration result | Q1 (%) | Q2 (%) | Q3 (Wh/L) |
|---|---|---|---|---|---|---|---|---|---|---|---|
| | Type | R1 (Ω·cm) | Type | R2 (Ω·cm) | | | | | | | |
| Example 1 | LFP | 30 | NCM | 4500 | 150 | 120 | 80 | Smoke vented | 90.99 | 81.45 | 494.34 |
| Example 2 | LFP | 80 | NCM | 1600 | 20 | 120 | 80 | Smoke vented | 93.81 | 84.22 | 472.39 |
| Example 3 | LFP | 30 | NCM | 1500 | 50 | 120 | 80 | Smoke vented | 91.28 | 82.01 | 482.63 |
| Example 4 | LFP | 30 | NCM | 3600 | 120 | 120 | 80 | Smoke vented | 89.12 | 78.3 | 491.52 |
| Example 5 | LFP | 30 | NCM | 5400 | 180 | 120 | 80 | Smoke vented | 89.57 | 79.24 | 508.95 |
| Example 6 | LFP | 30 | NCM | 9000 | 300 | 120 | 80 | Smoke vented | 88.55 | 76.83 | 511.36 |
| Example 7 | LFP | 30 | NCM | 15000 | 500 | 120 | 80 | Smoke vented | 86.12 | 72.84 | 517.94 |
| Example 8 | LFP | 10. | NCM | 1500 | 150 | 120 | 80 | Smoke vented | 91.50 | 82.21 | 452.11 |
| Example 9 | LFP | 20 | NCM | 3000 | 150 | 120 | 80 | Smoke vented | 91.45 | 82.02 | 464.31 |
| Example 10 | LFP | 50 | NCM | 7500 | 150 | 120 | 80 | Smoke vented | 90.58 | 81.39 | 497.56 |
| Example 11 | LFP | 60 | NCM | 9000 | 150 | 120 | 80 | Smoke vented | 89.91 | 79.13 | 505.26 |
| Example 12 | LFP | 80 | NCM | 12000 | 150 | 120 | 80 | Smoke vented | 88.87 | 78.12 | 513.02 |
| Example 13 | LFP | 30 | NCM | 4500 | 150 | 40 | 80 | Ignited, no explosion | 90.33 | 79.6 | 537.57 |
| Example 14 | LFP | 30 | NCM | 4500 | 150 | 60 | 80 | Smoke vented | 90.00 | 79.3 | 501.22 |
| Example 15 | LFP | 30 | NCM | 4500 | 150 | 140 | 80 | Smoke vented | 89.91 | 78.9 | 472.32 |
| Example 16 | LFP | 30 | NCM | 4500 | 150 | 160 | 80 | Smoke vented | 89.51 | 78.31 | 469.77 |
| Example 17 | LFP | 30 | NCM | 4500 | 150 | 120 | 40 | Smoke vented | 88.6 | 77.73 | 460.31 |
| Example 18 | LFP | 30 | NCM | 4500 | 150 | 120 | 60 | Smoke vented | 89.2 | 78.53 | 475.21 |
| Example 19 | LFP | 30 | NCM | 4500 | 150 | 120 | 140 | Smoke vented | 91.6 | 82.02 | 513.25 |
| Example 20 | LFP | 30 | NCM | 4500 | 150 | 120 | 160 | Ignited, no explosion | 92.56 | 83.01 | 526.69 |
| Example 21 | LFMP | 30 | NCM | 4500 | 150 | 120 | 80 | Smoke vented | 88.87 | 78.12 | 512.47 |
| Example 22 | LiMn₂O₄ | 30 | NCM | 4500 | 150 | 120 | 80 | Smoke vented | 81.87 | 72.12 | 520.42 |
| Example 23 | LFP | 30 | NCM | 4500 | 150 | 120 | 80 | Smoke vented | 83.87 | 74.12 | 524.47 |
| | LiMn₂O₄ | | | | | | | | | | |
| Example 24 | LFP | 30 | LRNCM | 4500 | 150 | 120 | 80 | Smoke vented | 88.56 | 77.06 | 551.71 |
| Example 25 | LFP | 30 | NCM | 4500 | 150 | 120 | 80 | Smoke vented | 90.36 | 80.07 | 469.77 |
| Example 26 | LFP | 30 | NCM | 4500 | 150 | 120 | 80 | Smoke vented | 87.13 | 76.38 | 490.45 |
| Comparative example 1 | LFP | 30 | NCM | 4500 | 150 | 120 | 80 | Smoke vented | 73.44 | 69.4 | 494.34 |
| Comparative example 2 | LFP | 30 | NCM | 21000 | 700 | 120 | 80 | Smoke vented | 77.16 | 71.07 | 442.63 |

### [Preparation of battery cell]

### (1) Preparation of positive electrode plate

A slurry for the first film layer was prepared: the first active material, a conductive agent, a binder, and NMP were mixed and stirred to form a slurry. A slurry for the second film layer was prepared: the second active material, a conductive agent, a binder, and NMP were mixed and stirred to form a slurry. The types and proportions of the materials in the slurry for the first film layer and the slurry for the second film layer are shown in Table 1 and Table 2.

An extrusion coating apparatus was used to apply the slurry for the first film layer and the slurry for the second film layer onto the surface of an aluminum foil as the positive electrode current collector, and after drying and cold pressing, a positive electrode plate was obtained. The thicknesses of the first film layer and the second film layer are shown in Table 1.

### (2) Preparation of negative electrode plate

Negative electrode active substance graphite, conductive agent acetylene black, binder styrene-butadiene rubber, and thickener sodium carboxymethyl cellulose were mixed in a weight ratio of graphite: acetylene black: styrene-butadiene rubber: sodium carboxymethyl cellulose = 95:2:2:1, an appropriate amount of deionized water was added, and the mixture was thoroughly stirred to form a uniform negative electrode slurry; the slurry was coated onto a copper foil as the negative electrode current collector, and after drying and cold pressing, a negative electrode plate was obtained.

### (3) Preparation of electrolyte

In an argon atmosphere glove box with a water content of less than 10 ppm, one or more solvents were mixed in a weight ratio to obtain a mixed solvent, a certain mass of fully dried lithium salt LiPF₆ was dissolved in the mixed solvent, an inorganic lithium salt additive was then added, and after uniform stirring, an electrolyte was obtained.

### (4) Preparation of battery cell

The positive electrode plate, a separator (polyethylene porous polymer film), and the negative electrode plate were stacked in sequence, with the separator positioned between the positive electrode plate and the negative electrode plate to provide isolation, and then wound to obtain an electrode assembly; the electrode assembly was placed in a housing, the prepared electrolyte was injected into the housing, and after vacuum sealing, standing, formation, and shaping processes, a battery cell was obtained.

### [Determination of first active material and second active material]

A certain mass of the active material layer was taken, prepared into a sample through grinding and pressing, and analyzed using an X-ray diffraction instrument with a scan rate of 5°/min over a range of 10-80°. Comparison with the characteristic peaks of the corresponding materials was made to confirm the types of active materials.

### [Determination of resistivity of active material powder]

A certain mass of the sample was weighed, the depth of the loading chamber of a testing instrument (a powder resistivity tester, model ST2722 digital four-probe tester) was adjusted, the sample was added to the loading chamber, pressure was applied ranging from 0 to 25 MPa, and the powder resistivity test results at different pressure points were recorded. The resistivity in the embodiments of this application is exemplified at 4 MPa.

### [Cycling performance test]

At 25/45°C, the battery cell was first charged to 4.3 V at a constant current of 1C, then further charged at a constant voltage of 4.3 V until the current reached 0.05C, and subsequently discharged to 3 V at a constant current of 1C; this constituted one charge-discharge cycle, with the discharge capacity of this cycle being the discharge capacity of the first cycle. The battery underwent a test of multiple charge-discharge cycles in the above manner, the discharge capacity after the 200th cycle was measured, and the capacity retention rate of the battery cell after cycling was calculated using the following formula. Capacity retention rate after 200 cycles of the battery (wt%) = [discharge capacity after 200 cycles/discharge capacity after the first cycle] × 100wt%.

### [Needle penetration test]

The battery cell was charged to a fully charged state placed on a needle penetration sample stage, and a 3 mm steel needle was used to pierce the cell at a speed of 1 mm/s from a direction perpendicular to the electrode plate of the battery, with the piercing position near the geometric center of the pierced surface, continuing until complete penetration or thermal runaway occurred.

In the examples of this application, both smoke venting and ignition without explosion indicate passing the needle penetration test. In other words, no explosion signifies passing the needle penetration test.

### Energy density test

Under room temperature (25°C ± 2°C), the battery was discharged to the lower limit voltage in a constant current discharge mode (1/3C rate), left to stand for 30 minutes, then charged to the upper limit cutoff voltage using a constant current and constant voltage charging mode (constant current 1/3C, constant voltage charging to 1/20C), and left to stand for 30 minutes, and the discharge energy E (in Wh) was recorded; this process was repeated 3 times, and the average of the three discharge energies E was taken, and divided by the volume V of the hard-shell battery cell to obtain the volumetric energy density (in Wh/L) = Eaverage / V.

As shown in Examples 1-26 and Comparative Examples 1 and 2, disposing the first active material and the second active material in different film layers, with the resistivity of the first active material and the second active material satisfying a specific relationship, alleviates the initial capacity fade of the battery cell, contributing to enhancing the cycling performance of the battery cell, thereby facilitating improvement of the performance of the battery cell.

As shown in Examples 2-7, reasonably setting the resistivity relationship between the first active material and the second active material further reduces the capacity fade in the early cycles, enhancing the cycling performance of the battery cell. As shown in Examples 8-12, reasonably setting the resistivity of the first active material and the second active material facilitates preparation of the first active material and the second active material while improving the cycling performance of the battery cell. As shown in Examples 13-20, reasonably setting the thicknesses of the first film layer and the second film layer allows flexible selection of the required energy density, reliability, and other properties of the battery cell according to actual conditions while improving the cycling performance of the battery cell. As shown in Examples 21-24, the technical solution of the embodiments of this application is applicable to different active materials. As shown in Examples 25 and 26, the technical solution of the embodiments of this application is applicable to positive electrode plates of various structures.

This application is not limited to the foregoing embodiments. The foregoing embodiments are merely examples, and embodiments having substantially the same constructions and the same effects as the technical idea within the scope of the technical solutions of this application are all included in the technical scope of this application. Additionally, without departing from the essence of this application, various modifications to the embodiments that can be conceived by persons skilled in the art, and other configurations constructed by combining some of the constituent elements in the embodiments, are also included in the scope of this application.

## Claims

1. A positive electrode plate comprising:
a positive electrode current collector (10) and a first film layer (11) and a second film layer (12) disposed on a same side of at least one surface of the positive electrode current collector (10); wherein
the first film layer (11) comprises a first active material, the first active material comprising at least one of a material with an olivine structure and a material with a spinel structure;
the second film layer (12) comprises a second active material, the second active material comprising a material with a layered structure; and
a resistivity R1 of the first active material and a resistivity R2 of the second active material satisfy: 20 ≤ R2/R1 ≤ 500.

2. The positive electrode plate according to claim 1, wherein the resistivity R1 of the first active material and the resistivity R2 of the second active material satisfy: 50 ≤ R2/R1 ≤ 300.

3. The positive electrode plate according to claim 1 or 2, wherein the resistivity R1 of the first active material ranges from 10 Ω·cm to 80 Ω·cm; optionally, from 20 Ω·cm to 60 Ω·cm.

4. The positive electrode plate according to any one of claims 1 to 3, wherein the resistivity R2 of the second active material ranges from 1500 Ω·cm to 15000 Ω·cm; optionally, from 3000 Ω·cm to 9000 Ω·cm.

5. The positive electrode plate according to any one of claims 1 to 4, wherein the second film layer (12) is located on a surface of the first film layer (11) away from the positive electrode current collector (10).

6. The positive electrode plate according to any one of claims 1 to 4, wherein the first film layer (11) is located on a surface of the second film layer (12) away from the positive electrode current collector (10).

7. The positive electrode plate according to any one of claims 1 to 6, wherein the first active material comprises a core of the first active material and a first coating layer covering the core of the first active material, the core of the first active material comprising at least one of the material with an olivine structure and the material with a spinel structure, the first coating layer comprising a carbon material.

8. The positive electrode plate according to any one of claims 1 to 7, wherein the material with an olivine structure comprises LiFe_{1-x-y}MnₓM¹_{y}PO₄, 0 ≤ x ≤ 1, 0 ≤ y < 1, 0 ≤ x+y ≤ 1, M¹ comprising at least one of transition metal elements or non-transition metal elements other than Fe and Mn; optionally, M¹ comprising at least one of Cr, Mg, Ti, Al, Zn, W, Nb, and Zr; optionally, the LiFe_{1 -x-y}MnₓM¹_{y}PO₄ comprising at least one of LiFePO₄, LiMnPO₄, and LiFe_{0.5}Mn_{0.5}PO₄.

9. The positive electrode plate according to any one of claims 1 to 8, wherein the material with a spinel structure comprises at least one of LiMn₂O₄ and LiNiₑMn₂₋ₑO₄, wherein 0 < e < 2.

10. The positive electrode plate according to any one of claims 1 to 9, wherein the material with a layered structure comprises at least one of LiCoO₂, LiMnO₂, LiNiO₂, LiNiₐCo_{b}Mn_{1-a-b}O₂, LiNi_{c}Co_{d}Al_{1-c-d}O₂, and nLi₂MnO₃·(1-n)LiM²O₂, wherein 0 < a < 1,0 < b < 1, 0 < a+b < 1,0 < c < 1, 0 < d < 1,0 < c+d < 1, 0 < n < 1, M² comprising at least one of Co, Ni, and Mn.

11. The positive electrode plate according to any one of claims 1 to 10, wherein a thickness d1 of the first film layer (11) ranges from 40 µm to 160 µm; optionally, from 60 µm to 140 µm.

12. The positive electrode plate according to any one of claims 1 to 11, wherein a thickness d2 of the second film layer (12) ranges from 40 µm to 160 µm; optionally, from 60 µm to 140 µm.

13. The positive electrode plate according to any one of claims 1 to 12, wherein, based on a total weight of the first film layer (11), a weight percentage of the first active material ranges from 90 wt% to 99 wt%; optionally, from 96 wt% to 98 wt%;
and/or
based on a total weight of the second film layer (12), a weight percentage of the second active material ranges from 90 wt% to 99 wt%; optionally, from 96 wt% to 98 wt%.

14. The positive electrode plate according to any one of claims 1 to 13, wherein, based on the total weight of the first film layer (11), a weight percentage of a conductive agent in the first film layer (11) ranges from 0.1 wt% to 1 wt%; optionally, from 0.3 wt% to 0.6 wt%;
and/or
based on the total weight of the second film layer (12), a weight percentage of a conductive agent in the second film layer (12) ranges from 0.1 wt% to 1 wt%; optionally, from 0.3 wt% to 0.6 wt%.

15. The positive electrode plate according to claim 14, wherein the conductive agent comprises at least one of superconducting carbon, conductive carbon black, Ketjen black, carbon dots, and carbon fibers.

16. The positive electrode plate according to any one of claims 1 to 15, wherein, based on the total weight of the first film layer (11), a weight percentage of a binder in the first film layer (11) ranges from 1 wt% to 2 wt%; optionally, from 1.2 wt% to 1.4 wt%;
and/or
based on a total weight of the second film layer (12), a weight percentage of a binder in the second film layer (12) ranges from 1 wt% to 2 wt%; optionally, from 1.2 wt% to 1.4 wt%.

17. The positive electrode plate according to claim 16, wherein the binder comprises at least one of polyvinylidene fluoride, styrene-butadiene rubber, polytetrafluoroethylene, vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, vinylidene fluoride-hexafluoropropylene copolymer, vinylidene fluoride-trichloroethylene copolymer, fluorine-containing acrylate resin, polyacrylonitrile, polyvinylpyrrolidone, polyvinyl acetate, polyethylene-co-vinyl acetate, polyethylene oxide, and polyarylate.

18. A method of preparing a positive electrode plate comprising:
providing a positive electrode current collector (10); and
preparing a first film layer (11) and a second film layer (12) on a same side of at least one surface of the positive electrode current collector (10); wherein
the first film layer (11) comprises a first active material, the first active material comprising at least one of a material with an olivine structure and a material with a spinel structure;
the second film layer (12) comprises a second active material, the second active material comprising a material with a layered structure; and
a resistivity R1 of the first active material and a resistivity R2 of the second active material satisfy: 20 ≤ R2/R1 ≤ 500.

19. A battery cell comprising the positive electrode plate according to any one of claims 1 to 17.

20. A battery comprising the battery cell according to claim 19.

21. An electric apparatus comprising the battery according to claim 20.
